# EUROPÄISCHE PATENTSCHRIFT

(11) **EP 2 565 151 B1**
(45) Veröffentlichungstag und Bekanntmachung des Hinweises auf die Patenterteilung: **20.07.2016**
(21) Anmeldenummer: 12181056.8
(22) Anmeldetag: 20.08.2012
(51) Int. Cl.: B67D 1/08, A47J 31/44, A47J 31/46

(54) **Getränkeauslauf und Getränkespender**
Beverage outlet and drink dispenser therewith
Sortie de boissons et distributeur de boissons

(30) Priorität: 29.08.2011 DE 102011081712
(43) Veröffentlichungstag der Anmeldung: 06.03.2013
(73) Patentinhaber: BSH Hausgeräte GmbH, 81739 München (DE)
(72) Erfinder: Gruber, Michael, 83362 Surberg (DE); Heilmaier, Marion, 83317 Teisendorf (DE); Kusstatscher, Herbert, 83371 Stein a.d. Traun (DE); Thies, Manuel, 85386 Dietersheim (DE)

(56) Entgegenhaltungen:
- EP-A1- 1 086 641
- EP-A1- 1 915 932
- WO-A1-2009/135899
- DE-A1- 4 130 446
- DE-A1-102004 062 747
- GB-A- 1 573 441

## Beschreibung

Die Erfindung betrifft einen Getränkeauslauf für einen Getränkespender zum Führen einer Flüssigkeit, der ein Zulaufrohr zum Anschluss an eine geräteinterne Flüssigkeitszuführung, ein Auslaufrohr zur Entnahme der Flüssigkeit und eine zwischen dem Zulaufrohr und dem Auslaufrohr angeordnete Zwischenkammer zur Beruhigung einer Flüssigkeitsströmung hat, sowie einen Getränkespender mit einem derartigen Getränkeauslauf.

Getränkeausläufe für Getränke- und Wasserspender zum Führen einer Flüssigkeit sind meistens für einen bestimmten Volumenstrom der Flüssigkeit ausgelegt, der ein Zapfen der Flüssigkeit mit einem gleichmäßigen Strahlbild erlaubt. Bei Heißwasserspendern besteht regelmäßig das Problem, dass bei Zapfungen im Siedetemperaturbereich Dampfanteile im auslaufenden Wasser vorhanden sind, welche ein ungleichmäßiges Strahlbild bewirken.

Zur Vergleichmäßigung des Strahlbildes bei Heißwasserspendern wird beispielsweise in der EP 2 044 868 A1 vorgeschlagen, zwischen einem Zulaufrohr und einem Auslaufrohr eine Zwischenkammer anzuordnen. Die Zwischenkammer ist zur Außenumgebung druckentlastet und führt zu einer Beruhigung der Heißwasserströmung. Die Druckentlastung erfolgt über das Auslaufrohr, welches hierzu einen größeren Durchflussquerschnitt als das Zulaufrohr hat. Das Auslaufrohr hat somit zwei Funktionen. Zum einen dient es als Flüssigkeitskanal für das auslaufende Heißwasser. Zum anderen wirkt es als Entlüftungskanal. Zwar lässt sich das Wasser in der Zwischenkammer grundsätzlich beruhigen, jedoch können aufgrund der Doppelfunktion des Auslaufrohrs bei bestimmten Volumenströmen Störungen des Strahlbildes nicht ausgeschlossen werden.

In der GB 618 762 ist ein Getränkeauslauf gezeigt, der in einem in Strömungsrichtung betrachtet vorderen Bereich eine Trennung der Dampfanteile von den Flüssiganteilen einer erhitzten Flüssigkeit bewirkt. In einem hinteren Bereich bewirkt der Getränkeauslauf dann eine Zusammenführung der Dampf- und Flüssiganteile zu einem Flüssigkeitsstrahl derart, dass die Dampfanteile die Flüssiganteile ummanteln. Zum Austreiben der Dampfanteile aus dem Flüssigkeitsstrahl werden in einer Zwischenkammer Turbulenzen in die Flüssigkeit eingebracht, auf deren Vertikalachse ein oberes Zulaufrohr und ein unteres Auslaufrohr positioniert sind. Nachteilig an diesem Getränkeauslauf ist jedoch, dass die Flüssiganteile durch die Turbulenzen verwirbelt aus dem Auslaufrohr ausströmen, was sich nachteilig auf das Strahlbild auswirkt.

Aus der DE 41 30 446 A1 ist ein Getränkeauslauf gemäß dem Oberbegriff des Anspruchs 1 bekannt.

Aufgabe der Erfindung ist es, einen Getränkeauslauf für einen Getränkespender zum Führen einer Flüssigkeit zu schaffen, der die vorgenannten Nachteile beseitigt und sowohl ein einheitliches Strahlbild bei verschiedenen Volumenströmen als auch ein einheitliches Strahlbild bei wechselnden und insbesondere sehr hohen Flüssigkeitstemperaturen ermöglicht. Des Weiteren ist es Aufgabe der Erfindung, einen Getränkespender zu schaffen.

Diese Aufgabe wird gelöst durch einen Getränkeauslauf mit den Merkmalen des Patentanspruchs 1 und durch einen Getränkespender mit den Merkmalen des Patentanspruchs 15. Vorteilhafte Aus- und Weiterbildungen, welche einzeln oder in Kombination miteinander einsetzbar sind, sind Gegenstand der jeweils abhängigen Ansprüche.

Ein erfindungsgemäßer Getränkeauslauf für einen Getränkespender zum Führen einer Flüssigkeit hat ein Zulaufrohr zum Anschluss an eine geräteinterne Flüssigkeitszuführung, ein Auslaufrohr zur Entnahme der Flüssigkeit und eine zwischen dem Zulaufrohr und dem Auslaufrohr angeordnete Zwischenkammer zur Beruhigung einer Flüssigkeitsströmung. Das Auslaufrohr hat einen kleineren Durchflussquerschnitt als das Zulaufrohr und zumindest ein Verbindungskanal zwischen der Zwischenkammer und einer Außenumgebung zum Abführen von Dampfanteilen der Flüssigkeit aus der Zwischenkammer Erfindungsgemäß ist der Verbindungskanal zum Zusammenführen von Anteilen eines Kondensats mit durch das Auslaufrohr austretenden Flüssigkeitsanteilen der Flüssigkeit in Richtung einer Austrittsmündung des Auslaufrohrs geführt.

Dadurch, dass das Auslaufrohr einen kleineren Durchflussquerschnitt als das Zulaufrohr hat, kann die in die Zwischenkammer einströmende Flüssigkeit nicht sofort abfließen. Hierdurch wirkt die Zwischenkammer als ein Sammelbecken für die Flüssigkeit, was zum einen eine Beruhigung der Flüssigkeit bewirkt, da Druckschwankungen in der einströmenden Flüssigkeit ausgeglichen werden, bevor die Flüssigkeit aus dem Auslaufrohr ausläuft. Zum anderen bewirkt die Funktion Sammelbecken einen kontinuierlichen Auslaufvolumenstrom, unabhängig von einem Zulaufvolumenstrom. Ferner wird durch die Funktion Sammelbecken erreicht, dass bei einer Heißflüssigkeit die gesamte bzw. nahezu die gesamte Dampfmenge aus der Heißflüssigkeit austreten kann, da diese in dem Sammelbecken quasi eine stehende Heißflüssigkeitsmenge mit einer großen Verdampfungsoberfläche bildet. Die Funktion Sammelbecken bewirkt somit ein von der Flüssigkeitsmenge und der Flüssigkeitstemperatur unabhängiges einheitliches Strahlbild. Durch den in die Außenumgebung mündenden Verbindungskanal wird dabei erreicht, dass die Dampfmenge aus der Zwischenkammer austreten kann und diese somit druckentlastet zur Außenumgebung ist. Bei einer Heißflüssigkeit wirkt der Verbindungskanal somit vorrangig als Entlüftungskanal. Bei einer Kaltflüssigkeit wirkt der Verbindungskanal als Belüftungskanal und dient somit ebenfalls zum Druckausgleich, da durch die zulaufende Flüssigkeit Luft in der Zwischenkammer zur Außenumgebung verdrängt werden kann. Beim Auslaufen der Flüssigkeit durch das Auslaufrohr kann dann die verdrängte Luftmenge durch den Verbindungskanal wieder in die Zwischenkammer nachströmen. Das Auslaufrohr dient somit ausschließlich als Flüssigkeitsrohr und nicht als ein multifunktionales Flüssigkeitsgasrohr, was sich ebenfalls positiv auf das Strahlbild auswirkt.

Die Beruhigung der Flüssigkeitsströmung in der Zwischenkammer lässt sich verbessern, wenn das Zulaufrohr zwar oberhalb des Auslaufrohrs positioniert ist, diese jedoch in Längsrichtung und/oder Querrichtung des Getränkeauslaufs versetzt zueinander angeordnet sind. Hierdurch laufen Turbulenzen, die durch das Einströmen in die Zwischenkammer in die Flüssigkeit eingebracht werden, bis zum Auslaufrohr aus.

Zur Ermöglichung einer vollständigen Leerung der Zwischenkammer, kann das Auslaufrohr in einer bodenseitigen Senke der Zwischenkammer angeordnet sein.

Zur Beruhigung und zur Ausrichtung eines Auslaufvolumenstroms kann in dem Auslaufrohr zumindest ein sich in Ausströmungsrichtung erstreckender Führungssteg angeordnet sein.

Um ein sich in der Zwischenkammer bildendes Kondensat gezielt in Richtung einer Bodenwandung führen zu können, kann die Zwischenkammer von einer konkaven Deckelinnenfläche begrenzt sein.

Um eine schnellstmögliche Zusammenführung bzw. Rückführung des sich in dem Verbindungsrohr bildenden Kondensats in die aus dem Auslaufrohr ausströmende Flüssigkeit zu gewährleisten, kann sich der Verbindungskanal vertikal zwischen einer auslaufseitigen unteren Kanalöffnung und einer entgegengesetzten oberen Kanalöffnung erstrecken.

Zur gezielten Rückführung von Anteilen des Kondensats aus dem Verbindungskanal im Bereich der oberen Kanalöffnung in die Zwischenkammer kann der Getränkeauslauf eine Tropfnase zum Führen von Anteilen eines Kondensats haben.

Zur Vermeidung bzw. Reduzierung von Flüssigkeitsmengenverlusten durch die abgeschiedenen Dampfanteile ist es vorteilhaft, wenn der Verbindungskanal derart in Richtung des Auslaufrohrs geführt ist, dass Anteile des im Verbindungskanal entstehenden Kondensats mit dem durch das Auslaufrohrrohr austretenden Flüssiganteilen zusammengeführt werden.

Zum gezielten Führen der Kondensatanteile in Richtung des Auslaufrohrs ist es vorteilhaft, wenn in den Verbindungskanal zumindest ein Leitelement zum Führen der Kondensatanteile zur Austrittsmündung des Auslaufrohrs angeordnet ist. Zudem wird durch das Leitelement eine Fläche zum Niederschlag des Kondensats vergrößert.

Um auch Anteile des Kondensats zur Austrittsmündung des Auslaufrohrs zu führen, die sich beim Niederschlag des Dampfes an einer Kanalinnenwandung bilden, kann in dem Verbindungskanal eine sich von der Kanalwandung erstreckende Leitstufe ausgebildet sein, von der sich das Leitelement mit einer Leitkante in Richtung der Austrittsmündung erstreckt.

Der Getränkeauslaufs ist vorzugsweise ein Spritzgussteil. Zur Vereinfachung der Fertigung kann der Verbindungskanal ein von einer Trennwand abgetrennter Bereich der Zwischenkammer sein.

Die Fertigung lässt sich weiter vereinfachen, wenn die obere Kanalöffnung zwischen der Trennwand und einem Deckelelement zum Begrenzen der Zwischenkammer und des Verbindungskanals ausgebildet ist.

Zum Abfangen von Dampfstößen, die sich insbesondere bei hohen Temperaturen in der zuströmenden Flüssigkeit ausbilden, kann das Zulaufrohr auf ein in die Zwischenkammer hineinragendes Prallelement gerichtet sein.

Um einen Austritt der Flüssiganteile der in die Zwischenkammer unter Druck einströmenden Flüssigkeit durch die obere Kanalöffnung zu verhindern, ist es vorteilhaft, wenn das Prallelement zwischen dem Zulaufrohr und der oberen Kanalöffnung angeordnet ist.

Ein erfindungsgemäßer Getränkespender hat einen erfindungsgemäßen Getränkeauslauf und zeichnet sich hierdurch durch ein ausgeglichenes Strahlbild bei unterschiedlichen Durchflussmengen sowie bei unterschiedlichen Flüssigkeitstemperaturen aus. Des Weiteren zeichnet sich der Getränkespender durch eine einfache Fertigung aus.

Sonstige vorteilhafte Ausführungsbeispiele der Erfindung sind Gegenstand weiterer Unteransprüche.

Die Erfindung eignet sich insbesondere zur Bereitstellung eines Getränkeauslaufs für einen Getränkespender, der ein gleichmäßiges bzw. vergleichmäßigtes einheitliches Strahlbild bei unterschiedlichen Durchflussmengen und bei unterschiedlichen Flüssigkeitstemperaturen hat, ein spritzloses Zapfen eines Getränkes ermöglicht sowie fertigungstechnisch einfach herzustellen ist.

Im Folgenden wird ein bevorzugtes Ausführungsbeispiel der Erfindung anhand schematischer Darstellungen näher erläutert. Es zeigen:
- Figur 1: eine perspektivische Darstellung eines offenen erfindungsgemäßen Getränkeauslaufs,
- Figur 2: einen Längsschnitt durch den geschlossenen erfindungsgemäßen Getränkeauslauf, und
- Figur 3: eine Detaildarstellung eines in Figur 2 geschnittenen Deckelelementes.

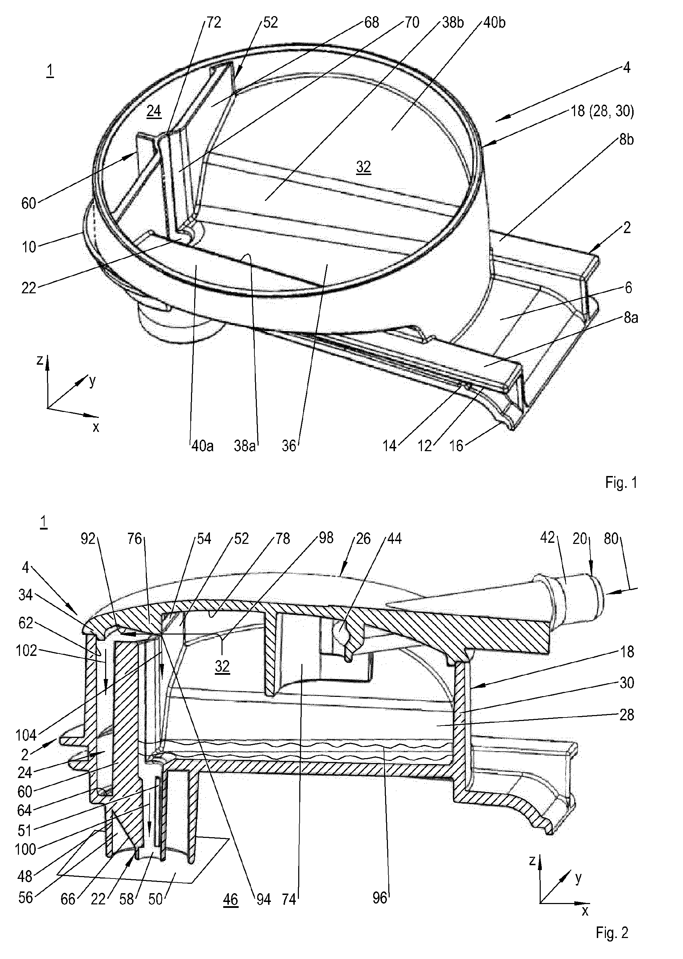

Figur 1 zeigt ein geöffnetes Ausführungsbeispiel eines erfindungsgemäßen Getränkeauslaufs 1 für einen Getränkespender zum Führen bzw. Zapfen einer zu einem Getränk aufbereiteten Flüssigkeit. Der Getränkeauslauf 1 hat ein längliches Grundelement 2 zur Aufnahme in einer Schiebekulisse des Getränkespenders und ein Entnahmeelement 4 zur Entnahme des Getränkes bzw. der aufbereiteten Flüssigkeit. Unter dem Begriff Getränk bzw. Flüssigkeit wird im Folgenden sowohl ein geschmackliches Heißgetränk wie Kaffee als auch ein geschmacksneutrales Heißgetränk wie Heißwasser verstanden. Zudem werden unter dem Begriff Getränk bzw. Flüssigkeit Kaltgetränke wie Kaltwasser verstanden.

Das Grundelement 2 hat eine Grundplatte 6, von der sich zwei in Längsrichtung x des Getränkeauslaufs 1 verlaufende Seitenwandungen 8a, 8b erstrecken. Die Seitenwandungen 8a, 8b sind kopfseitig über eine sich im Wesentlichen in Querrichtung y des Getränkeauslaufs 1 verlaufende bogenförmige Stirnwandung 10 miteinander verbunden. Heckseitig ist der Getränkeauslauf 1 geöffnet. Zum Zusammenwirken mit der Schiebekulisse des Getränkespenders ist in den Wandungen 8a, 8b, 10 eine außenliegende und durchgehende Führungsnut 12 ausgebildet. Zur Verrastung des Getränkeauslaufs 1 mit der Schiebekulisse ist heckseitig in seitlichen Nutabschnitten der Führungsnut 12 jeweils eine Rastnase 14 zur Verrastung mit jeweils einer schiebekulissenseitigen Rastvertiefung bzw. mit einem schiebekulissenseitigen Rastvorsprung angeordnet. Alternativ können die Rastnasen 14 zur Sicherung des Getränkeauslaufs 1 mittels Reibschlusses an der Schiebekulisse verwendet werden. Durch die Führungsnut 12 im Zusammenwirken mit der getränkespenderseitigen Schiebekulisse und der Verrastung wird eine schnelle und einfache Montage sowie Demontage des Getränkeauslaufs 1 und somit des Getränkespenders geschaffen. Zur Bildung eines stufenlosen Übergangs mit einer Seitenwand des Getränkespenders ist die Grundplatte 6 heckseitig bogenförmig abgewinkelt, wodurch die Führungsnut 12 jeweils endseitig quasi keilförmig erweitert ist. Zudem ist heckseitig eine Schulter 16 ausgebildet, mit der sich der Getränkeauslauf 1 an der Seitenwand abstützt.

Das Entnahmeelement 4 hat ein Gehäuse 18 und, wie in Figur 2 gezeigt, ein Zulaufrohr 20, ein Auslaufrohr 22 sowie einen Verbindungskanal 24. Vorzugsweise ist das Gehäuse 18 ein integral mit dem Grundelement 2 ausgebildetes Spritzgussteil. Lediglich ein Deckelement 26 des Gehäuses 18 wird separat im Spritzguss hergestellt.

Das Gehäuse 18 weist einen becherförmigen Hohlkörper mit einer Bodenwandung 28 und mit einer zylindrischen Seitenwandung 30 sowie das Deckelelement 26 auf. Die Bodenwandung 28 und die Seitenwandung 30 begrenzen eine Zwischenkammer 32, die von dem Deckelelement 26 verschlossen ist. Das Deckelelement 26 ist gegenüberliegend zur Bodenwandung 28 angeordnet und stützt sich mit einem Kragen 34 auf der Seitenwandung 30 ab. Es ist dampfdicht mit der Seitenwandung 30 verbunden und vorzugsweise stoffschlüssig an dieser angebunden. Das Deckelelement 26 ist auf der Seitenwandung 30 frei rotierbar und kann somit auch durch Rotationsschweißen mit dem Hohlkörper verbunden werden.

Die Bodenwandung 28 hat, wie in Figur 1 beziffert, einen sich in Längsrichtung x erstreckenden Rinnenabschnitt 36, der in Richtung des Auslaufrohrs 22 geneigt und seitlich von zwei stark zueinander angestellten Bodenabschnitten 38a, 38b der Bodenwandung 28 begrenzt ist. Die stark geneigten Bodenabschnitte 38a, 38b gehen in jeweils einen in Richtung des Rinnenabschnitts 36 flach geneigten Bodenabschnitt 40a, 40b der Bodenwandung 28 über. Durch diese Gestaltung der Bodenwandung 28 wird erreicht, dass die Flüssigkeit von jedem bodenwandungsseitigen Bereich der Zwischenkammer 32 zum Auslaufrohr 22 geführt wird und somit eine vollständige Entleerung der Zwischenkammer 32 erfolgt.

Das Zulaufrohr 20 dient zum Einführen der Flüssigkeit in die Zwischenkammer 32. Es ist integral mit dem Deckelelement 26 ausgebildet und durchsetzt dieses. Zum selbsttätigen Entleeren ist es in Richtung einer Zulaufströmung geneigt. Es hat einen außerhalb der Zwischenkammer 32 angeordneten Anschlussabschnitt 42 zum Anschluss einer internen nicht gezeigten Flüssigkeitszuführung und eine innerhalb der Zwischenkammer 32 angeordnete Eintrittsmündung 44.

Das Auslaufrohr 22 durchsetzt die Bodenwandung 28 und mündet in eine Außenumgebung 46. Es ist von einem Mantelrohr 48 umgriffen, welches an einer von dem Entnahmeelement 4 abgewandten Seite des Grundelementes 4 integral mit der Grundplatte 6 ausgebildet ist. Vorzugsweise münden das Auslaufrohr 22 und das Mantelrohr 48 in eine gemeinsame Ebene 50. Zur Bildung eines temporären Sammel- oder Staubeckens für die einströmende Flüssigkeit bzw. zum zeitversetzten Ausströmen hat das Auslaufrohr 22 einen Durchflussquerschnitt, der kleiner als ein Durchflussquerschnitt des Zulaufrohrs 20 ist. Um zu verhindern, dass im Bereich des Auslaufrohrs 22 durch die einströmende Flüssigkeit Turbulenzen in der sich in der Zwischenkammer 32 aufstauenden Flüssigkeitsmenge erzeugt werden, sind das Auslaufrohr 22 und das Zulaufrohr 20 vertikal bzw. in Horizontalrichtung z nicht axial übereinander, sondern in Längsrichtung x und in Querrichtung y des Getränkeauslaufs 1 versetzt zueinander angeordnet. Zum Ausrichten des Auslaufvolumenstroms weist das Auslaufrohr 22 bspw. drei Führungsstege, von denen in der Schnittdarstellung nach Figur 2 ein Führungssteg 51 beziffert sind.

Der Verbindungskanal 24 dient zur Entlüftung und Belüftung der Zwischenkammer 32 zur Außenumgebung 46. Er erstreckt sich in Hochrichtung z des Getränkeauslaufs 1 und somit in Längsrichtung des Auslaufrohrs 22. Er ist durch eine Trennwand 52 von der Zwischenkammer 32 abgetrennt. Er hat eine obere schlitzartige Kanalöffnung 54, die sich in Querrichtung y und somit nahezu über die gesamte Breite der Zwischenkammer 32 erstreckt und zwischen der Trennwand 52 und dem Deckelelement 26 angeordnet ist. Zudem hat der Verbindungskanal 24 eine untere bogenartige Kanalöffnung 56, die von einem Mantelabschnitt des Mantelrohrs 48 gebildet ist.

Wenn die Flüssigkeit Dampfanteile wie bspw. Heißwasser nahe der Siedetemperatur enthält, können diese über den dann als Entlüftungskanal wirkenden Verbindungskanal 24 aus der Zwischenkammer 32 entweichen. Die Zwischenkammer 32 wird zu Außenumgebung 46 druckentlastet und somit entlüftet. Die zumindest teilweise in dem Verbindungskanal 24 kondensierenden Dampfanteile werden anschließend in der Ebene 50 mit einem aus dem Auslaufrohr 22 ausströmenden Flüssigteil des Heißwassers zusammengeführt.

Wenn die Flüssigkeit keine Dampfanteile wie bspw. Kaltwasser enthält, wirkt der Verbindungskanal 24 als Belüftungskanal. Luft, die sich in der Zwischenkammer 32 befindet, wird durch das einströmende Kaltwasser in die Außenumgebung 46 verdrängt. Beim Auslaufen des Kaltwassers durch das Auslaufrohr 22 strömt dann die verdrängte Luftmenge wieder in die Zwischenkammer 32 nach.

Zum gezielten Führen des sich im Verbindungskanal 24 bildenden Kondensats zur Austrittsmündung 58 des Auslaufrohrs 22 ist in dem Verbindungskanal 24 ein Leitelement 60 angeordnet. Das Leitelement 60 ist als eine Rippe ausgebildet, die sich in Hochrichtung z von der oberen Kanalöffnung 54 zur unteren Kanalöffnung 56 erstreckt. Es ist an der Trennwand 52 angebunden und über diese hinaus in Richtung der Austrittmündung 58 verlängert.

Insbesondere zur gezielten Führung von Kondensatanteilen, die sich an einer der Trennwand 52 gegenüberliegenden Innenwandung 64 des Verbindungskanals 24 niederschlagen, ist im Bereich des Mantelrohrs 48 eine radial in den Verbindungskanal 24 ragende Leitstufe 62 angeordnet. Die Leitstufe 62 hat eine nicht bezifferte Senke, an der das Leitelement 60 angebunden ist und von der es sich mit einer in Richtung der Austrittsmündung 62 orientierten und somit schräg zur Hochrichtung z angestellten Leitkante 66 erstreckt.

Wie in Figur 2 beziffert, erstreckt sich die Trennwand 52 in Querrichtung y des Getränkeauslaufs 1 über das Auslaufrohr 22 hinaus. Zur einfachen spritzgusstechnischen Herstellung des Gehäuses 18 ist in einer der Zwischenkammer 32 zugewandten Begrenzungsfläche 68 der Trennwand 52 eine rinnenartige Kernvertiefung 70 eingebracht. Aufgrund der geringen Wandstärke der Trennwand 52 wird die Kernvertiefung 70 als eine dammartige in den Verbindungskanal 24 ragende Erhebung 72 abgebildet, an der das Leitelement 60 angebunden ist. Die Kernvertiefung 70 erstreckt sich in Hochrichtung z und ermöglicht das Ausführen eines Werkzeugdorns beim Entformen des Gehäuses 18. Wenn sich die Trennwand 56 nicht über das Auslaufrohr 22 erstreckt, kann die Kernvertiefung 70 entfallen.

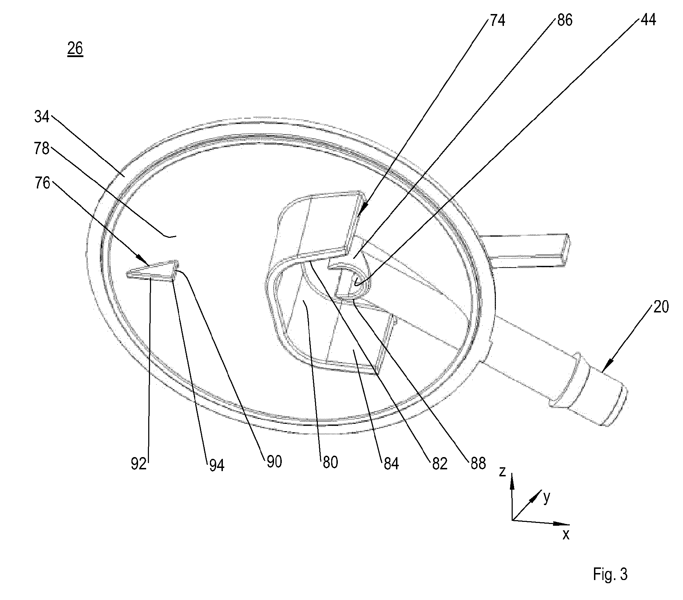

Das Deckelelement 26 weist neben dem integrierten Zulaufrohr 20 ein in den Figuren 2 und 3 beziffertes Prallelement 74 und eine Tropfnase 76 auf. Das Prallelement 74 ist einstückig mit dem Deckelelement 26 ausgebildet und erstreckt sich von einer Deckelinnenfläche 78 in Hochrichtung z und somit quer zur Zulaufströmung in den Zwischenraum 32 hinein. Es ist als eine im Wesentlichen U-förmige Wand ausgebildet, die mit einer Prallfläche 80 gegenüber der Eintrittsmündung 44 des Zulaufrohrs 20 angeordnet ist. Die Prallfläche 80 wird von zwei Seitenflächen 82, 84 flankiert, die in Richtung des Zulaufrohrs 20 betrachtet, zumindest bis zur Eintrittsmündung 44 geführt sind. Im in Figur 2 gezeigten geschlossenen Zustand ist das Prallelement 74 zwischen der Eintrittsmündung 44 des Zulaufrohrs 20 und der oberen Kanalöffnung 54 angeordnet. Wie in Figur 3 beziffert ist die Eintrittsmündung 44 des Zulaufrohrs 20 von zwei bogenförmigen sich in Hochrichtung z erstreckenden Lenkschnitten 86, 88 flankiert, die mit ihren Konkavflächen gegenüberliegend angeordnet sind und orthogonal zur Prallfläche 80 orientiert sind.

Die Tropfnase 76 ist integral mit dem Deckelement 26 ausgebildet. Sie hat eine keilförmige Geometrie und erstreckt sich in Hochrichtung z von der Deckelinnenfläche 78. Insbesondere hat sie eine in Hochrichtung z verlaufende Vertikalkante 90 und eine Schrägkante 92, die eine in Hochrichtung z betrachtet untere Tropfspitze 94 bilden. Die Tropfnase 76 dient zum Leiten von Kondensatanteilen aus dem Verbindungskanal 24 im Bereich der oberen Kanalöffnung 54 zurück in die Zwischenkammer 32. Hierzu ist sie derart an der Deckelinnenfläche 78 angeordnet, dass sich, wie in Figur 2 gezeigt, im geschlossenen Zustand die Schrägkante 92 von der Deckelinnenfläche 78 aus dem Verbindungskanal 24 über die Trennwand 52 durch die obere Kanalöffnung 54 in die Zwischenkammer 32 zur Tropfspitze 94 erstreckt, die somit in der Zwischenkammer 32 angeordnet ist.

Zum schnellen Abführen des sich an dem Deckelelement 26 niedergeschlagenen Kondensats in den Verbindungkanal 24 und in die Zwischenkammer 32 ist die Deckelinnenfläche 78 konkav ausgebildet.

Unter Bezugnahme auf Figur 1 wird im Folgenden eine erfindungsgemäße Funktionsweise der Erfindung erläutert: Über das Zulaufrohr 20 gelangt die Flüssigkeit oder das Flüssigkeitsdampfgemisch in die Zwischenkammer 32, die neben dem Auslaufrohr 22 über den Verbindungskanal 24 mit der Außenumgebung 46 in Verbindung steht. Aufgrund des kleinen Durchflussquerschnitts des Auslaufrohrs 22 und des großen Durchflussquerschnitts des Zulaufrohrs 20 strömt die Flüssigkeit nicht sofort vollständig aus der Zwischenkammer 32 ab. Es wird automatisch eine Flüssigkeitsmenge 96 in der Zwischenkammer 32 aufgestaut und somit eine zu- und abfließende Flüssigkeitsströmung beruhigt. Die Flüssigkeitsmenge 96 bildet quasi eine stehende Flüssigkeit und verhindert eine direkte Kopplung zwischen einem Zulaufvolumenstrom und einem Auslaufvolumenstrom. Druckschwankungen und sonstige Störungen in dem Zulaufvolumenstrom werden nicht an den Auslaufvolumenstrom weitergeleitet. Aufgrund der Aufstauung und der Druckentlastung der Zwischenkammer 32 über den Verbindungskanal 24 strömt der Auslaufvolumenstrom drucklos bzw. unter Atmosphärendruck kontinuierlich durch das Auslaufrohr 22 aus der Zwischenkammer 32 aus, was in einem einheitlichen und vergleichmäßigten Strahlbild resultiert. Durch eine entsprechende Größe der Zwischenkammer 32 kann bei unterschiedlichen Flüssigkeitsmengen 96 und somit bei unterschiedlichen Zulaufvolumenströmen ein identisches Strahlbild erzielt werden.

Dampfanteile 98 in der einströmenden Flüssigkeit und insbesondere in der Flüssigkeitsmenge 96 steigen in der Zwischenkammer 32 auf und werden somit von den Flüssiganteilen 100 der Flüssigkeit getrennt. Hierdurch besitzt die durch das Auslaufrohr 22 auslaufende Flüssigkeit nahezu bzw. ausschließlich Flüssiganteile 100. Die Dampfanteile 98 entweichen durch obere Kanalöffnung 54 aus der Zwischenkammer 32 in den Verbindungskanal 24 und kondensieren in diesem. Anteile 102 des Kondensats schlagen sich an dem Leitelement 60 und an der Leitstufe 64 nieder und werden von diesen zur Austrittsmündung 58 des Auslaufrohrs 22 geführt, wo sie mit den Flüssiganteilen 100 zur gezapften Flüssigkeit zusammengeführt werden. Zudem werden Anteile 104 des Kondensats aus dem Verbindungskanal 24 im Bereich der oberen Kanalöffnung 54 über die Tropfnase 76 zurück in die Zwischenkammer 32 geführt. Druckstöße innerhalb der zuströmenden Flüssigkeit 96 werden mittels des Prallelements 74 abgefangen.

Offenbart ist ein erfindungsgemäßer Getränkeauslauf für einen Getränkespender zum Führen einer Flüssigkeit, mit einem Zulaufrohr zum Anschluss an eine geräteinterne Flüssigkeitszuführung, einem Auslaufrohr zur Entnahme der Flüssigkeit und mit einer zwischen dem Zulaufrohr und dem Auslaufrohr angeordneten Zwischenkammer zur Beruhigung einer Flüssigkeitsströmung, wobei das Auslaufrohr einen kleineren Durchflussquerschnitt als das Zulaufrohr hat, und wobei zumindest ein Verbindungskanal zwischen der Zwischenkammer und einer Außenumgebung zum Abführen von Dampfanteilen der Flüssigkeit aus der Zwischenkammer vorgesehen ist.

### Bezugszeichenliste

- 1: Getränkeauslauf
- 2: Grundelement
- 4: Entnahmeelement
- 6: Grundplatte
- 8a, b: Seitenwandung
- 10: Stirnwandung
- 12: Führungsnut
- 14: Rastnase
- 16: Schulter
- 18: Gehäuse
- 20: Zulaufrohr
- 22: Auslaufrohr
- 24: Verbindungskanal
- 26: Deckelelement
- 28: Bodenwandung
- 30: Seitenwandung
- 32: Zwischenkammer
- 34: Kragen
- 36: Rinnenabschnitt
- 38a, b: stark geneigter Wandabschnitt
- 40a, b: flach geneigter Wandabschnitt
- 42: Anschlussabschnitt
- 44: Eintrittsmündung
- 46: Außenumgebung
- 48: Mantelrohr
- 50: Ebene
- 51: Führungssteg
- 52: Trennwand
- 54: obere Kanalöffnung
- 56: untere Kanalöffnung
- 58: Austrittsmündung
- 60: Leitelement
- 62: Innenwandung
- 64: Leitstufe
- 66: Leitkante
- 68: Begrenzungsfläche
- 70: Kernvertiefung
- 72: Erhebung
- 74: Prallelement
- 76: Tropfnase
- 78: Deckelinnenfläche
- 80: Prallfläche
- 82: Seitenfläche
- 84: Seitenfläche
- 86: Lenkabschnitt
- 88: Lenkabschnitt
- 90: Vertikalkante
- 92: Schrägkante
- 94: Tropfspitze
- 96: Flüssigkeitsmenge
- 98: Dampfanteile
- 100: Flüssiganteile
- 102: Kondensatanteile
- 104: Kondensatanteile

- x: Längsrichtung Getränkeauslauf
- y: Querachse Getränkeauslauf
- z: Hochrichtung Getränkeauslauf

## Patentansprüche

1. Getränkeauslauf (1) für einen Getränkespender zum Führen einer Flüssigkeit, mit einem Zulaufrohr (20) zum Anschluss an eine geräteinterne Flüssigkeitszuführung, mit einem Auslaufrohr (22) zur Entnahme der Flüssigkeit und mit einer zwischen dem Zulaufrohr (20) und dem Auslaufrohr (22) angeordneten Zwischenkammer (32) zur Beruhigung einer Flüssigkeitsströmung, wobei das Auslaufrohr (22) einen kleineren Durchflussquerschnitt als das Zulaufrohr (20) hat, und wobei zumindest ein Verbindungskanal (24) zwischen der Zwischenkammer (32) und einer Außenumgebung (46) zum Abführen von Dampfanteilen (98) der Flüssigkeit aus der Zwischenkammer (32) vorgesehen ist,
**dadurch gekennzeichnet, dass**
der Verbindungskanal (24) zum Zusammenführen von Anteilen (102) eines Kondensats mit durch das Auslaufrohr (22) austretenden Flüssiganteilen (100) der Flüssigkeit in Richtung einer Austrittsmündung (58) des Auslaufrohrs (22) geführt ist.

2. Getränkeauslauf nach Anspruch 1, wobei das Zulaufrohr (20) oberhalb des Auslaufrohrs (22) in Längsrichtung (x) und/oder Querrichtung (y) versetzt angeordnet ist.

3. Getränkeauslauf nach Anspruch 1 oder 2, wobei das Auslaufrohr (22) in einer bodenseitigen Senke der Zwischenkammer (32) angeordnet ist.

4. Getränkeauslauf nach Anspruch 1, 2 oder 3, wobei in dem Auslaufrohr (22) zumindest ein sich in Strömungsrichtung erstreckender Führungssteg (51) angeordnet ist.

5. Getränkeauslauf nach einem der vorhergehenden Ansprüche, wobei die Zwischenkammer (32) von einer konkaven Deckelinnenfläche (78) begrenzt ist.

6. Getränkeauslauf nach einem der vorhergehenden Ansprüche, wobei sich der Verbindungskanal (24) vertikal zwischen einer oberen Kanalöffnung (54) und einer unteren Kanalöffnung (56) erstreckt.

7. Getränkeauslauf nach Anspruch 6, wobei eine Tropfnase (76) zum Führen von Anteilen (104) des Kondensats aus dem Verbindungskanal (24) im Bereich der oberen Kanalöffnung (54) in die Zwischenkammer (32) vorgesehen ist.

8. Getränkeauslauf nach einem der vorhergehenden Ansprüche, wobei in dem Verbindungskanal (24) zumindest ein Leitelement (60) zum Führen von Anteilen (102) des Kondensats zur Austrittsmündung (58) angeordnet ist.

9. Getränkeauslauf nach einem der vorhergehenden Ansprüche, wobei in dem Verbindungskanal (24) eine Leitstufe (64) zum Auffangen von Anteilen (102) des Kondensats ausgebildet ist, von der sich das Leitelement (60) mit einer Körperkante (66) in Richtung der Austrittsmündung (58) erstreckt.

10. Getränkeauslauf nach einem der vorhergehenden Ansprüche, wobei der Verbindungskanal (24) ein durch eine Trennwand (52) abgetrennter Bereich der Zwischenkammer (32) ist.

11. Getränkeauslauf nach Anspruch 10, wobei die obere Kanalöffnung (54) zwischen der Trennwand (52) und einem Deckelelement (26) zum Begrenzen der Zwischenkammer (32) und des Verbindungskanals (24) ausgebildet ist.

12. Getränkeauslauf nach einem der vorhergehenden Ansprüche, wobei das Zulaufrohr (20) auf ein in die Zwischenkammer (32) ragendes Prallelement (74) gerichtet ist.

13. Getränkeauslauf nach Anspruch 12, wobei das Prallelement (74) zwischen dem Zulaufrohr (20) und der oberen Kanalöffnung (54) des Verbindungskanals (24) angeordnet ist.

14. Getränkespender mit einem Getränkeauslauf (1) nach einem der vorhergehenden Ansprüche.

## Claims

1. Beverage outlet (1) for a drink dispenser for guiding a liquid, with a supply pipe (20) for connection to a liquid supply inside the device, with an outlet pipe (22) for removing the liquid and with an intermediate chamber (32) arranged between the supply pipe (20) and the outlet pipe (22) for slowing down a liquid flow, wherein the outlet pipe (22) has a smaller flow cross-section than the supply pipe (20) and wherein at least one connecting duct (24) is provided between the intermediate chamber (32) and an outside environment (46) for discharging vapour components (98) of the liquid out of the intermediate chamber (32), **characterised in that** the connecting duct (24) for merging components (102) of a condensate with liquid components (100) of the liquid passing through the outlet pipe (22) is guided in the direction of an outlet port (58) of the outlet pipe (22).

2. Beverage outlet according to claim 1, wherein the supply pipe (20) is arranged offset above the outlet pipe (22) in the longitudinal direction (x) and/or transverse direction (y).

3. Beverage outlet according to claim 1 or 2, wherein the outlet pipe (22) is arranged in a depression in the base of the intermediate chamber (32).

4. Beverage outlet according to claim 1, 2 or 3, wherein at least one guiding web (51) which extends in the flow direction is arranged in the outlet pipe (22).

5. Beverage outlet according to one of the preceding claims, wherein the intermediate chamber (32) is delimited by a concave inner surface (78) of the cover.

6. Beverage outlet according to one of the preceding claims, wherein the connecting duct (24) extends vertically between an upper duct opening (54) and a lower duct opening (56).

7. Beverage outlet according to claim 6, wherein a drip groove (76) is provided for guiding components (104) of the condensate out of the connecting duct (24) in the region of the upper duct opening (54) into the intermediate chamber (32).

8. Beverage outlet according to one of the preceding claims, wherein at least one guide element (60) for guiding components (102) of the condensate to the outlet port (58) is arranged in the connecting duct (24).

9. Beverage outlet according to one of the preceding claims, wherein embodied in the connecting duct (24) is a guide step (64) for collecting components (102) of the condensate, from which guide step (64) the guide element (60) with a body edge (66) extends in the direction of the outlet port (58).

10. Beverage outlet according to one of the preceding claims, wherein the connecting duct (24) is a region of the intermediate chamber (32) separated by a separating wall (52).

11. Beverage outlet according to claim 10, wherein the upper duct opening (54) is embodied between the separating wall (52) and a cover element (26) for delimiting the intermediate chamber (32) and the connecting duct (24).

12. Beverage outlet according to one of the preceding claims, wherein the supply pipe (20) is directed at an impact element (74) protruding into the intermediate chamber (32).

13. Beverage outlet according to claim 12, wherein the impact element (74) is arranged between the supply pipe (20) and the upper duct opening (54) of the connecting duct (24).

14. Drink dispenser having a beverage outlet (1) according to one of the preceding claims.

## Revendications

1. Sortie de boissons (1) pour un distributeur de boissons pour le guidage d'un liquide, avec un tube d'amenée (20) pour une liaison à une amenée de liquide intérieure à l'appareil, avec un tube de sortie (22) pour le prélèvement du liquide et avec une chambre intermédiaire (32) disposée entre le tube d'amenée (20) et le tube de sortie (22) pour la tranquillisation d'un courant de liquide, le tube de sortie (22) ayant une section transversale d'écoulement plus petite que celle du tube d'amenée (20), et étant prévu au moins un canal de liaison (24) entre la chambre intermédiaire (32) et un emplacement extérieur voisin (46) pour l'évacuation de fractions de vapeur (98) du liquide hors de la chambre intermédiaire (32),
**caractérisée en ce que**
le canal de liaison (24) pour la réunion de fractions (102) d'un condensat et de fractions liquides (100) du liquide sortant par le tube de sortie (22) est guidé dans la direction d'une embouchure de sortie (58) du tube de sortie (22).

2. Sortie de boissons selon la revendication 1, dans laquelle le tube d'amenée (20) est décalé vers le haut par rapport au tube de sortie (22) dans la direction longitudinale (x) et/ou dans la direction transversale (y).

3. Sortie de boissons selon la revendication 1 ou 2, dans laquelle le tube de sortie (22) est disposé dans une dépression du côté du fond de la chambre intermédiaire (32).

4. Sortie de boissons selon la revendication 1, 2 ou 3, dans laquelle est disposée dans le tube de sortie (22) au moins une tige de guidage (51) s'étendant dans la direction de l'écoulement.

5. Sortie de boissons selon l'une des revendications précédentes, dans laquelle la chambre intermédiaire (32) est délimitée par une surface intérieure de couvercle concave (78).

6. Sortie de boissons selon l'une des revendications précédentes, dans laquelle le canal de liaison (24) s'étend verticalement entre une ouverture de canal supérieure (54) et une ouverture de canal inférieure (56).

7. Sortie de boissons selon la revendication 6, dans laquelle est prévu un égouttoir (76) pour le guidage dans la chambre intermédiaire (32) de fractions (104) du condensat sortant du canal de liaison (24) dans la zone de l'ouverture de canal supérieure (54).

8. Sortie de boissons selon l'une des revendications précédentes, dans laquelle est disposé dans le canal de liaison (24) au moins un élément de guidage (60) pour le guidage de fractions (102) du condensat vers l'embouchure de sortie (58).

9. Sortie de boissons selon l'une des revendications précédentes, dans laquelle est constitué dans le canal de liaison (24) un gradin de guidage (64) pour le recueil de fractions (102) du condensat, à partir duquel s'étend l'élément de guidage (60) avec un contour (66) dans la direction de l'embouchure de sortie (58).

10. Sortie de boissons selon l'une des revendications précédentes, dans laquelle le canal de liaison (24) est une zone de la chambre intermédiaire (32) séparée par une paroi de séparation (52).

11. Sortie de boissons selon la revendication 10, dans laquelle l'ouverture de canal supérieure (54) est constituée entre la paroi de séparation (52) et un élément de couvercle (26) pour la délimitation de la chambre intermédiaire (32) et du canal de liaison (24).

12. Sortie de boissons selon l'une des revendications précédentes, dans laquelle le tube d'amenée (20) est dirigé vers un élément d'impact (74) en saillie dans la chambre intermédiaire (32).

13. Sortie de boissons selon la revendication 12, dans laquelle l'élément d'impact (74) est disposé entre le tube d'amenée (20) et l'ouverture de canal supérieure (54) du canal de liaison (24).

14. Distributeur de boissons avec une sortie de boissons (1) selon l'une des revendications précédentes.
